# EUROPEAN PATENT APPLICATION

(11) **EP 2 381 423 A1**
(43) Date of publication of application: **26.10.2011**
(21) Application number: 10305311.2
(22) Date of filing: 26.03.2010
(51) Int. Cl.: G06T 19/00

(54) **Method for transforming web from 2d into 3d**

(71) Applicant: Alcatel Lucent, 75008 Paris (FR)
(72) Inventor: Lou, Zhe, 2000, Antwerp (BE); Moons, Jan, 2220, Heist-Op-Den-Berg (BE)
(74) Representative: Narmon, Gisèle Marie Thérèse

(57) **Abstract**

A method for transforming a 2D webpage comprising html elements, into a 3D scene wherein the most interesting html elements for the user appear in the most visible places. To this end, an importance value is associated to each html element and the html element is located into the 3D scene based on location identification derived from the importance value associated to the html element. The importance value of an html element may be defined based on the amount of clicks made on the html element in the 3D scene. One or more avatars may be included into the 3D scene. The location identification may then be based on positions, movements and other actions, or on statistics thereof, of the avatars with respect to the html element in the 3D scene.

## Description

The present invention relates to a method for transforming a 2D webpage comprising html elements, into a 3D scene wherein said html elements are located.

Such a method is already known in the art, e.g. from "Exit Reality" < www.exitreality.com > that launched "the entire web in 3D" with the intention of transforming a webpage from 2D into 3D.

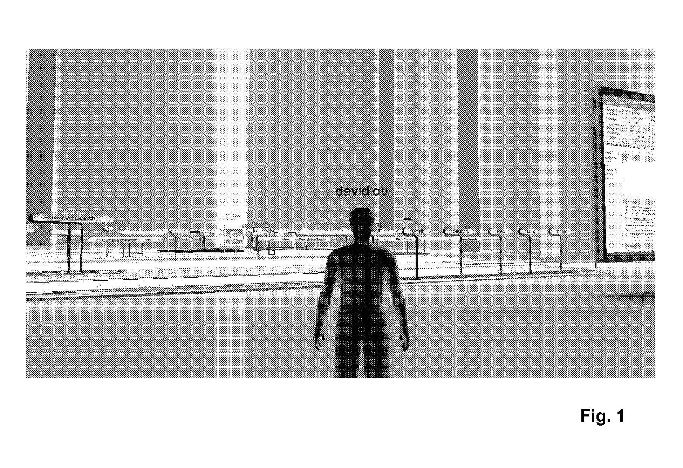

The known method automatically converts a 2D webpage to Virtual Reality Modeling Language VRML. Users can decorate their websites in 3D. An example of transformation performed by this method is shown at Fig. 1 where an "iGoogle"™ 2D webpage is shown into a 3D scene created with a specific template, here representing a hall.

In the 3D scene, hyperlinks or html elements contained in the former 2D webpage are randomly put somewhere in the hall.

Consequently, it may be very difficult to find desire information in this chaotic environment, sometimes even worse than in the original 2D webpage. When transforming a 2D webpage into a 3D scene, "where to put content" becomes an essential issue. Randomization is definitely not a good choice.

An object of the present invention is to provide a method of the above known type but wherein the content of the former 2D webpage is more efficiently distributed, i.e. located or spread, over the 3D scene.

According to the invention, this object is achieved due to the fact that said method comprises the steps of
- associating an importance value to each html element, and
- locating said html element into said 3D scene based on location identification derived from the importance value associated to said html element.

The fact that the hyperlinks or html elements are randomly put somewhere in the hall in the above known method is due to lack of location information in 2D webpage. By associating location identifications to the html elements of a 2D webpage, they can be located in more suitable places into the 3D scene.

Another characterizing embodiment of the present invention is that said method comprises the step of defining said importance value of an html element based on the amount of clicks made on said html element in said 3D scene.

In this way, the location identification of an html element in the 3D scene is derived from the amount of clicks performed on this hyperlink.

Also another characterizing embodiment of the present invention is that said method comprises the step of including an avatar into said 3D scene.

The avatar is generally a computer representation of a user in the form of a 3-dimensional model. As a result, if a user for instance often clicks a particular hyperlink, then this hyperlink will be put in a location that captures the first glance when his avatar appears.

Yet another characterizing embodiment of the present invention is that said method comprises the step of defining said importance value of an html element based on position, movement and other actions of said avatar with respect to said html element in said 3D scene.

In this way, the location identification of an html element in the 3D scene is derived from the position, movement and other actions of the avatar. If the avatar stays for instance in a place for a long time, it gives the indication that the content around this place should have a higher importance than the ones in other places. When a user visits a website for the first time, he should get an overall better 3D experience. As the user revisits the same website later, the location identification will put the last visited parts, i.e. html elements, of the website in a more prominent place than before.

In a preferred embodiment, the present invention is characterized in that said method comprises the steps of
- including a plurality of avatars into said 3D scene, and
- defining said importance value of an html element based on positions, movements and other actions of the avatars of said plurality with respect to said html element in said 3D scene.

In this way, all users' activities are consolidated and come out with a common 3D scene wherein the hyperlinks are suitably located for average users. In such the most interesting content to the user will appear in the most visible places in the 3D scene or environment.

Also another characterizing embodiment of the present invention is that said method comprises the steps of
- including at least one avatar into said 3D scene, and
- defining said importance value of an html element based on statistics of positions, movements and other actions of said avatar with respect to said html element in said 3D scene.

As a result, the locations or positions of the html elements in the 3D scene are dynamically updated according to the statistics of one or more avatar's positions, movements and other actions.

Further characterizing embodiments of the present method are mentioned in the appended claims.

It is to be noticed that the term 'comprising', used in the claims, should not be interpreted as being restricted to the means listed thereafter. Thus, the scope of the expression 'a device comprising means A and B' should not be limited to devices consisting only of components A and B. It means that with respect to the present invention, the only relevant components of the device are A and B.

Similarly, it is to be noticed that the term 'coupled', also used in the claims, should not be interpreted as being restricted to direct connections only. Thus, the scope of the expression 'a device A coupled to a device B' should not be limited to devices or systems wherein an output of device A is directly connected to an input of device B. It means that there exists a path between an output of A and an input of B which may be a path including other devices or means.

The above and other objects and features of the invention will become more apparent and the invention itself will be best understood by referring to the following description of an embodiment taken in conjunction with the accompanying drawings wherein:
Fig. 1 shows a 3D scene representing a 2D webpage as known from the prior art, and
Fig. 2 shows a system adapted to perform the method of the present invention.

The basic idea of the present invention is to transform a 2D webpage into a 3D webpage or scene wherein the hyperlinks of the 2D webpage are located in the 3D scene on places depending on their importance. In other words, a random and flat distribution of the hyperlinks as shown in the 3D scene of Fig. 1 obtained by a prior art method should be avoided.

To this end, each hyperlink or html element of the 2D webpage is associated to an "importance value". The html element then receives a "location identification" that is derived from its importance value. The html element is finally located into the 3D scene at a position defined by its location identification.

The importance value of an html element may for instance be derived from the amount of clicks made on this html element in the 3D scene.

In a preferred embodiment, the 3D scene includes an avatar that is a 3-dimensional representation of model of the computer's user.

The amount of clicks on a particular html element, the position, the movement and other actions of the user's avatar are then used to calculate the importance value of that html element. For instance, if a user often clicks a particular hyperlink, this hyperlink will be put at a location of high importance value that captures the first glance when his avatar appears in the 3D scene. If an avatar stays in a place for a long time, it gives the indication that the html elements around this place should have higher importance values than the ones in other places.

By introducing the location identification as new technical component associated to an html element, it is also possible to dynamically change the location of this html element in the 3D environment according to statistics of an avatar's position, movement and other actions.

The 3D scene may also include several avatars. The importance value of each html element may then be based on positions, movements and other actions of all the avatars with respect to that html element in said 3D scene.

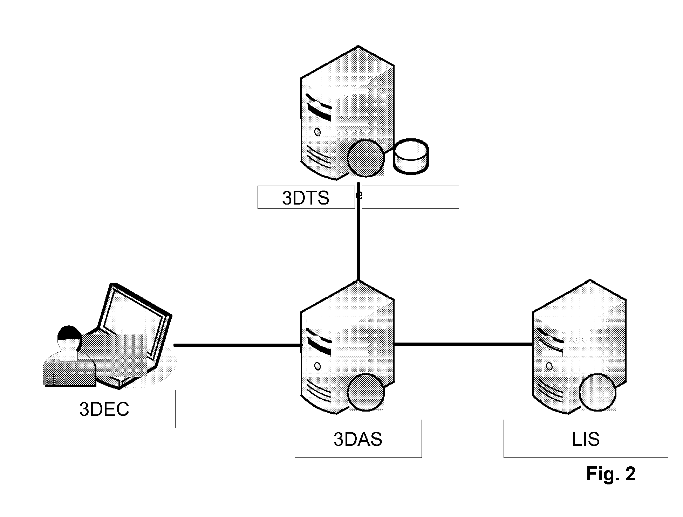

A system adapted to perform the above-described method is represented at Fig. 2. The system consists of a 3D Explorer Client 3DEC, a 3D Application Server 3DAS, a 3D Template Service 3DTS and a Location Identification Service LIS.

The location identification service LIS calculates the location of an html element based on statistics of an avatar's position and actions received from the 3D Application Server 3DAS.

The location identification service LIS has self-adaptation capability. For instance, when a user visits a website for the first time, LIS gets and logs an overall 3D experience. As the user revisits the site, the location identification service LIS put the last visited parts of the site in a more prominent place than before.

In another embodiment, the new location of an html element is calculated based on statistics of every avatar, e.g. of every single user visiting the web site, its position and actions instead of the one from a single avatar, i.e. the computer's user. The advantage of this embodiment is to consolidate all users' activities and to come out with a common 3D scene suitable for average users.

The 3D Application Server 3DAS translates html elements into a virtual reality mockup language, like VRML. 3DAS further logs the avatar's actions, e.g. clicking, touching, etc, as well as the avatar's position and movement.

The 3D Template Service 3DTS profiles user-defined or system-defined 3D environment templates.

This system operates as follows.

When a user starts to launch a 3D webpage at his 3D Explorer Client 3DEC, the 3D Application Server 3DAS will first collect a user-defined 3D scene template/environment, e.g. the representation of a hall, from the 3D Template Service 3DTS. This 3D scene template will be used for creating the 3D scene.

To this end, the 3D Application Server 3DAS then sends a previously logged avatar's position and actions together with the 3D scene template to the location identification service LIS.

The location identification service LIS calculates locations for the html elements based on the input from the 3D Application Server 3DAS and sends the result back to the 3DAS. The location of a html element in the 3D scene is thus based on location identification derived from the importance value associated to the html element and on the collected 3D scene template.

Finally the 3D Application Server 3DAS sends the newly constructed 3D scene back to the 3D Explorer Client 3DEC.

As a result, a 3D scene is created wherein the most interesting content for the user appears in the most visible places.

It is to be noted that in another embodiment the location identification service LIS may be integrated into the 3D Application Server 3DAS.

A final remark is that embodiments of the present invention are described above in terms of functional blocks. From the functional description of these blocks, given above, it will be apparent for a person skilled in the art of designing electronic devices how embodiments of these blocks can be manufactured with well-known electronic components. A detailed architecture of the contents of the functional blocks hence is not given.

While the principles of the invention have been described above in connection with specific apparatus, it is to be clearly understood that this description is merely made by way of example and not as a limitation on the scope of the invention, as defined in the appended claims.

## Claims

1. A method for transforming a 2D webpage comprising html elements, into a 3D scene wherein said html elements are located,
**characterized in that** said method comprises the steps of associating an importance value to each html element, and
locating said html element into said 3D scene based on location identification derived from the importance value associated to said html element.

2. The method according to claim 1, **characterized in that** said method comprises the step of defining said importance value of an html element based on the amount of clicks made on said html element in said 3D scene.

3. The method according to claim 1, **characterized in that** said method comprises the step of including an avatar into said 3D scene.

4. The method according to claim 3, **characterized in that** said method comprises the step of defining said importance value of an html element based on position, movement and other actions of said avatar with respect to said html element in said 3D scene.

5. The method according to claim 1, **characterized in that** said method comprises the steps of
including a plurality of avatars into said 3D scene, and
defining said importance value of an html element based on positions, movements and other actions of the avatars of said plurality with respect to said html element in said 3D scene.

6. The method according to claim 1, **characterized in that** said method comprises the steps of
including at least one avatar into said 3D scene, and
defining said importance value of an html element based on statistics of positions, movements and other actions of said avatar with respect to said html element in said 3D scene.

7. The method according to claim 1, **characterized in that** said method comprises the steps of
collecting a 3D scene template from a 3D Template Service (3DTS) for creating said 3D scene, and
locating said html element in said 3D scene based on location identification derived from the importance value associated to said html element and on the collected 3D scene template.
